# EUROPÄISCHE PATENTANMELDUNG

(11) **EP 3 338 731 A1**
(43) Veröffentlichungstag der Anmeldung: **27.06.2018**
(21) Anmeldenummer: 16206721.9
(22) Anmeldetag: 23.12.2016
(51) Int. Cl.: A61C 8/00

(54) **ZAHNMEDIZINISCHER EINSATZ ZUR VERBINDUNG EINES ZAHNMEDIZINISCHEN IMPLANTATS MIT EINEM ZAHNMEDIZINISCHEN AUFSATZ**

(71) Anmelder: Universität Basel, 4003 Basel (CH)
(72) Erfinder: STÜBINGER, Stefan, 4102 Binningen (CH); LINK, Markus, 4132 Muttenz (CH)
(74) Vertreter: Kleine, Hubertus

(57) **Zusammenfassung**

Ein zahnmedizinischer Einsatz zur Verbindung eines zahnmedizinischen Implantats mit einem zahnmedizinischen Aufsatz, wobei der zahnmedizinische Aufsatz zumindest zwei Schnittstellen aufweist, wobei eine erste Schnittstelle der zumindest zwei Schnittstellen im Zusammenspiel mit dem Aufsatz ausgebildet ist zur Fixierung des zahnmedizinischen Einsatzes mit dem Implantat durch eine Rast- und/oder Klemmverbindung und wobei eine zweite Schnittstelle der zumindest zwei Schnittstellen ausgebildet ist zur Fixierung des zahnmedizinischen Einsatzes mit dem zahnmedizinischen Aufsatz.

## Beschreibung

Die vorliegende Erfindung betrifft einen zahnmedizinischen Einsatz zur Verbindung eines zahnmedizinischen Implantats mit einem zahnmedizinischen Aufsatz, sowie eine Anordnung des zahnmedizinischen Einsatzes mit dem zahnmedizinischen Aufsatz und einem Zahnersatz.

Ausgehend vom vorgenannten Stand der Technik ist es somit die Aufgabe der vorliegenden Erfindung eine Verbindung zwischen einem zahnmedizinischen Implantat und einem zahnmedizinischen Aufsatz zu erreichen, welche hygienisch, und vorzugsweise biomechanisch stabil und formschlüssig, ist und nur geringe mechanische Belastungen bzw. vorteilhafte Kraftverteilungen aufweist.

Die Erfindung löst diese Aufgabe durch einen zahnmedizinischen Einsatz zur Verbindung eines zahnmedizinischen Implantats mit einem zahnmedizinischen Aufsatz mit den Merkmalen des Anspruchs 1, sowie einer Anordnung mit den Merkmalen des Anspruchs 8 und einem Zahnersatz mit den Merkmalen des Anspruchs 15.

Erfindungsgemäß ist ein zahnmedizinischer Einsatz zur Verbindung eines zahnmedizinischen Implantats mit einem zahnmedizinischen Aufsatz vorgesehen. Ein entsprechender Aufsatz kann vorzugsweise als eine Zahnkrone oder ein sogenanntes Abutment ausgebildet sein. Dieser zahnmedizinische Einsatz weist zumindest zwei Schnittstellen auf.

Eine erste Schnittstelle ist dabei im Zusammenspiel mit dem Aufsatz zur Fixierung des zahnmedizinischen Einsatzes mit dem Implantat durch zumindest eine Rast- und/oder Klemmverbindung ausgebildet.

Diese erste Schnittstelle kann dabei beispielsweise eine Aufnahme mit Rastnasen oder dergleichen aufweisen in welche ein Vorsprung des Implantats einführbar ist. Die Aufnahmewandung kann sodann durch die Verbindung des zahnmedizinischen Einsatzes mit dem zahnmedizinischen Aufsatz eine Materialverstärkung erhalten, so dass der Aufsatz mit dem Implantat formschlüssig durch Verrastung oder Verklemmung festgelegt wird.

Die zweite Schnittstelle ist ausgebildet zur Fixierung des Aufsatzes. Dies kann vorzugsweise durch Verschraubung erfolgen. Eine Verschraubung und ein Schraubkanal im Sinne der vorliegenden Erfindung sind u.a. auch Bajonett-Verbindungen, so dass zwei Elemente durch eine Drehbewegung anlog zu einer herkömmlichen Schraube miteinander in Eingriff gebracht werden.

Weitere vorteilhafte Ausgestaltungsvarianten der Erfindung sind Gegenstand der Unteransprüche.

Der zahnmedizinische Einsatz kann vorteilhaft als Einsteckkappe ausgebildet sein mit einer Kappenöffnung, einem Kappenboden und einer Kappenmantelfläche. Der Kappenboden ist dabei nicht zwingend eine geschlossene Fläche sondern er kann vorteilhaft Ausnehmungen aufweisen. Der Kappenboden weist vorteilhaft als erste der zumindest zwei Schnittstellen eine Aufnahme mit einem Aufnahmeraum aufweist zum Aufstecken auf einen Vorsprung des Implantats.

Die Aufnahme kann vorteilhaft einen Bereich zur Aufnahme einer Vorsprungsverdickung aufweisen und einen angrenzenden Bereich mit einer Querschnittsverengung der Aufnahme.

Die Einsteckkappe kann eine Längsachse aufweisen, wobei die Aufnahme vorteilhaft zentriert auf der Längsachse angeordnet ist.

Die Aufnahme kann eine Aufnahmewandung aufweisen, welche den Aufnahmeraum begrenzt, wobei sich benachbart zur Aufnahmewandung ein Kappenraum erstreckt in welchen der Aufsatz bereichsweise einführbar ist.

Die Aufnahmewandung kann vorteilhaft eine Wandstärke von weniger als 1 mm aufweisen, so dass eine begrenzte Verformbarkeit der Aufnahmewandung zum Einbringen des Vorsprungs in den Aufnahmeraum zu gewährleisten.

Die Einsteckkappe kann zudem vorteilhaft eine spaltförmige Ausnehmung aufweisen, welche sich über zumindest bereichsweise über den Kappenboden und zumindest bereichsweise über die Kappenhülse erstreckt. Diese Ausnehmung ist eine Art der Materialschwächung und ermöglicht eine begrenzte Variabilität der Öffnungsweise der Ausnehmung zur Aufnahme des Vorsprungs des Implantats.

Die zweite der zumindest zwei Schnittstellen kann als Schraubkanal ausgebildet sein. Dabei ist ein Gewinde- oder Bajonnett-Kanal als Schraubkanal im Sinne der vorliegenden Erfindung zu verstehen.

Alternativ kann die zweite Schnittstelle auch ein stiftartiger Vorsprung sein. Dieser kann in eine Ausnehmung der Aufnahme eingeführt und in der Ausnehmung vergossen, verklebt oder verrastet werden. Dabei bildet sich eine Anordnung aus, welche nachfolgend als erfindungsgemäße Anordnung bezeichnet wird.

Bei Verguss kann vorteilhaft eine Vergussmasse, vorzugsweise eine aushärtbare Vergussmasse eingesetzt werden. Besonders bevorzugt weist dabei die Vergussmasse im ausgehärteten Zustand eine geringere Härte als der Aufsatz auf, um beispielsweise ein Ausbohren der Vergussmasse zu ermöglichen.

Alternativ kann bei der Verrastung der Vorsprung endständig ein Rastelement, z.B. einen Spreizkopf, aufweisen, welcher einen Formenschluss mit einer Anschlagfläche des Aufsatzes bildet.

Die Aufnahmewand kann vorteilhaft Vorsprünge aufweisen, welche in den Aufnahmeraum hineinragen. Diese Vorsprünge hintergreifen eine Vorsprungsverdickung und ermöglichen eine Verstärkung der Fixierung des Vorsprungs und Verhindern die Verschiebbarkeit des Vorsprungs entlang der Achsrichtung der Längsachse des zahnmedizinischen Einsatzes.

Der Einsatz kann vorteilhaft zumindest zu 45 Gew.%, vorzugsweise zumindest zu 90 Gew.% ein Polyetherketon umfassen. Derartiges Material ist für den hygienischen Gebrauch im feuchten Mundraum geeignet und weist zudem Materialeigenschaften hinsichtlich der Materialverformung auf, welche sich vorteilhaft auf die Flexibilität der Öffnungsweite der Aufnahme auswirken.

Der zahnmedizinische Einsatz ist vorteilhaft, insbesondere durch Lösen des Formschlusses mit dem Aufsatz austauschbar und im Implantat festlegbar.

Dabei kann das Material des zahnmedizinischen Einsatzes zumindest einen antibakteriellen, desinfizierenden und/oder entzündungshemmenden Wirkstoff umfassen, welcher bei einer turnusgemäßen Kontrolle ersetzt werden kann. Durch die Auswechselbarkeit des Einsatzes kann auch stets der Wirkstoff erneuert werden. Die Wirkstoffdosierung im zahnmedizinischen Einsatz kann dabei je nach Grad des Krankheitsbildes gewählt werden. So kann es Einsätze mit keiner, geringer oder hoher Wirkstoffdosierung geben, welche je nach Bedarf, z.B. Entzündungsgrad, gewählt werden können.

Überdies weist der zahnmedizinische Einsatz einen Rand auf, welcher in radialer Richtung zur Längsachse der Einsteckkappe aus der Kappenmantelfläche hervorsteht und damit den Bereich zwischen dem Implantat und dem Einsatz vor Verschmutzung und dergleichen schützt.

Weiterhin erfindungsgemäß ist eine Anordnung mit einem Aufsatz und dem erfindungsgemäßen Einsatz. Diese beiden Elemente können bei bestimmungsgemäßen Einsatz oder auch schon beim Hersteller zu einer Einheit verbunden sein oder als kombinierbare Elemente verkauft werden. So ist es beispielsweise möglich, dass der zahnmedizinische Einsatz und der zahnmedizinische Aufsatz zueinander dimensioniert sind. Die Elemente der Anordnung können vor dem bestimmungsgemäßen Gebrauch getrennt voneinander jedoch in einer Verpackung vertrieben werden. Auch dies ist als Anordnung im Rahmen der vorliegenden Erfindung zu verstehen.

Die Verbindung beider Elemente kann durch ein mechanisches Verbindungsmittel erreicht werden. Es ist allerdings auch möglich eine Rastverbindung zwischen dem Aufsatz und dem Einsatz durch gesonderte oder integral ausgeformte Rastelemente zu erreichen, welche beim Austausch des zahnmedizinisches Aufsatzes und des zahnmedizinischen Einsatzes aufgebohrt bzw. gelöst werden können.

Der Aufsatz weist dabei einen ringförmigen Endabschnitt auf, welcher in den Kappenraum positionierbar ist. Als ringförmiger Endabschnitt ist insbesondere auch ein Ring zu verstehen, welcher Unterbrechungen und bogenförmige Ringsegmente aufweist, welche vorzugsweise auf einer gemeinsamen Ringebene liegen.

Zur optimalen Materialverstärkung und zur Vermeidung von Ansammlungen ist es von Vorteil, wenn zumindest 95% des Volumens des Kappenraumes, vorzugsweise der gesamte Kappenraum, durch den Aufsatz ausgefüllt ist.

Der ringförmige Endabschnitt des Aufsatzes kann an der Aufnahmewandung des Aufnahmeraumes anliegen.

Der ringförmige Endabschnitt des Aufsatzes kann die Aufnahme des zahnmedizinischen Einsatzes zumindest bereichsweise umgreifen, derart, dass zur Verhinderung einer radialen Aufweitung der Öffnungsweite der Aufnahme kommt. Somit wird die maximale Öffnungsweite der Aufnahme durch die Umgreifung des Aufsatzes begrenzt.

Der Aufsatz, insbesondere der ringförmige Endabschnitt, kann zumindest eine Ausnehmung und/oder einen Vorsprung aufweisen welcher mit einem korrespondierenden Vorsprung und/oder einer korrespondierenden Ausnehmung des Einsatzes einen Formenschluss zur Verdrehsicherung bildet.

Der ringförmige Endabschnitt kann parallel zur Längsachse des Einsatzes verlaufende Spalten, welche die Ringform des Endabschnittes unterbrechen, aufweisen. Dadurch kann eine gewisse Flexibilität im Bereich des Endabschnitts erreicht werden.

Ein erfindungsgemäßer Zahnersatz umfasst eine erfindungsgemäße Anordnung und ein Implantat, wobei das Implantat eine Längsachse A aufweist und wobei das Implantat zumindest bereichsweise schalenförmig mit einem Schalenraum ausgebildet ist und einen Vorsprung, insbesondere einen Vorsprung auf der Längsachse, aufweist, welcher sich in den Schalenraum erstreckt.

Vorzugsweise kann das Implantat zudem eine Schnittstelle zu einem Kieferknochen aufweisen, z.B. in Form eines Gewindes.

Die Erfindung wird anhand der nachfolgenden Figuren

Es zeigen:
- Fig. 1: Querschnitt einer erste Variante eines erfindungsgemäßen zahnmedizinischen Einsatzes für ein Zahnimplantat;
- Fig. 2: Perspektivische Darstellung des Einsatzes der Fig. 1
- Fig. 3: Querschnitt eines zumindest erfindungsgemäßen dreiteiligen Zahnersatzes umfassend ein Implantat, eine Einsteckkappe und ein zahnmedizinischer Aufsatz;
- Fig. 4: Darstellung des Zahnersatzes der Fig. 3 mit geschnittenem Implantat;
- Fig. 5: schematisch dargestellter Querschnitt eines zahnmedizinischen Aufsatzes mit einem mechanischen Verbindungselement;
- Fig. 6a: schematisch dargestellter Querschnitt eines ersten erfindungsgemäßen Zahnersatzes mit dem zahnmedizinischen Aufsatz der Fig. 5;
- Fig. 6b: schematisch dargestellter Querschnitt eines zweiten erfindungsgemäßen Zahnersatzes; und
- Fig. 6c: schematisch dargestellter Querschnitt eines dritten erfindungsgemäßen Zahnersatzes.

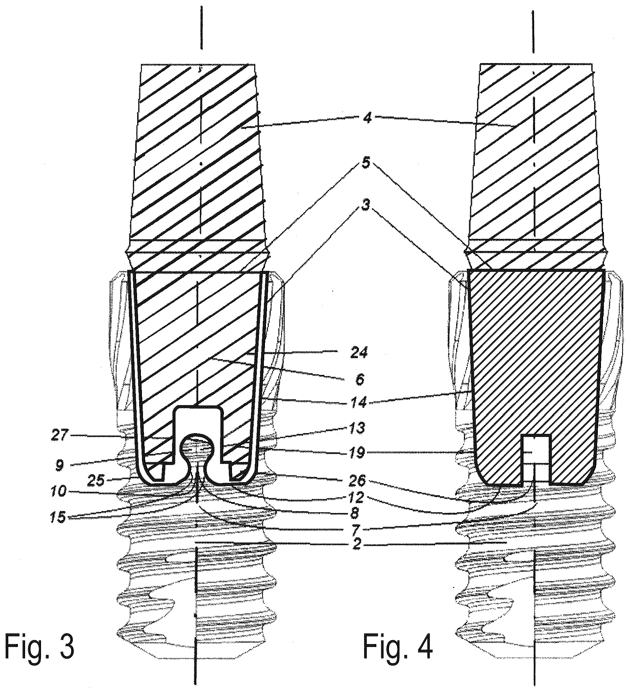

Fig. 3 und 4 zeigen einen erfindungsgemäßen dreiteiligen Aufbau eines Zahnersatzes 1. Dieser umfasst ein Implantat 2, eine erfindungsgemäße Einsteckkappe 3, sowie einen Aufsatz 4.

Das Implantat 2 selbst kann zumindest bereichsweise schalenförmig ausgebildet sein mit einer Schalenöffnung 5 und einem Schalenraum 6 zur Aufnahme der Einsteckkappe 3 und des Aufsatzes 4.

Das Implantat 2 kann zudem über ein Gewindebereich verfügen zur Anbindung des Implantats 2 und des gesamten Zahnersatzes 1 mit einem Kieferknochen.

Auf das Implantat 2 ist ein formschlüssig die Einsteckkappe 3 angeordnet. Auf die Einsteckkappe ist der Aufsatz 4 aufgesteckt.

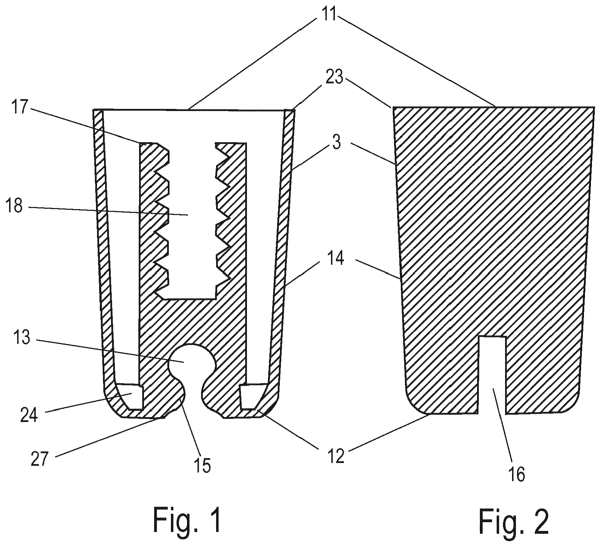

Das schalenförmige Implantat 2 weist einen Bodenbereich 7, insbesondere einen geschlossenen Bodenbereich, auf in welchem ein Vorsprung 8 angeordnet ist, welcher in den Schalenraum 6 hineinragt. Der Vorsprung weist eine Vorsprungsverdickung 9, biespielsweise einen endständigen Vorsprungskopf, und einen Vorsprungsschaft 10 auf. Auf den Vorsprung 8 ist die Einsteckkappe 3 aufgesteckt, welche im Detail in Fig. 1 und 2 näher dargestellt ist.

Die Einsteckkappe 3 weist einen Kappenraum 24 mit einer Kappenöffnung 11 auf, mit einer Öffnungsebene, welche im Wesentlichen parallel Öffnungsebene der Schalenöffnung 5 verläuft. Die Einsteckkappe weist zudem eine Längsachse A auf

Die Einsteckkappe 3 weist einen Kappenboden 12 auf mit einer hülsenförmigen Aufnahme 13, in welcher der Vorsprung 8 des schalenförmigen Implantats 2 anordenbar ist.

Dabei weist die hülsenförmige Aufnahme 13 randseitige Vorsprünge 15 auf, welche in einen durch eine Aufnahmewandung 27 der Aufnahme 13 gebildeten Aufnahmeraum hineinragen.

Im montierten Zustand der Einsteckkappe 3 sind die randseitigen Vorsprünge 15 zwischen der Vorsprungsverdickung 9 und dem Kappenboden 12 angeordnet und verhindern die Verschiebbarkeit R der Einsteckkappe 1 entlang der Längsachse A gegenüber dem schalenförmigen Implantat 2.

Die Einsteckkappe 3 kann im Wesentlichen in den endständigen Kappenboden 12 und in eine Kappenmantelfläche 14 unterteilt werden. Die Kappenmantelfläche 14 weist dabei im Wesentlichen die Form der Innenkontur einer den Schalenraum 6 begrenzenden Implantatwandung des Implantats 2 auf.

Die Einsteckkappe 3 weist zumindest eine spaltförmige Ausnehmungen 16 auf, welche sich entlang des Kappenbodens und bereichsweise entlang der Kappenmantelfläche 14 erstreckt.

Die spaltförmige Ausnehmung 16 ist eine Art Materialschwächung der Einsteckkappe 3 im Bereich des Kappenbodens 12 und ermöglicht eine Veränderung der Öffnungsweite der hülsenförmigen Aufnahme 13, so dass die Einsteckkappe 3 auf den Vorsprung 8 kraftlos oder unter Überwindung lediglich geringer materialumform-bedingter Rückstellkräfte aufsteck- und absteckbar ist.

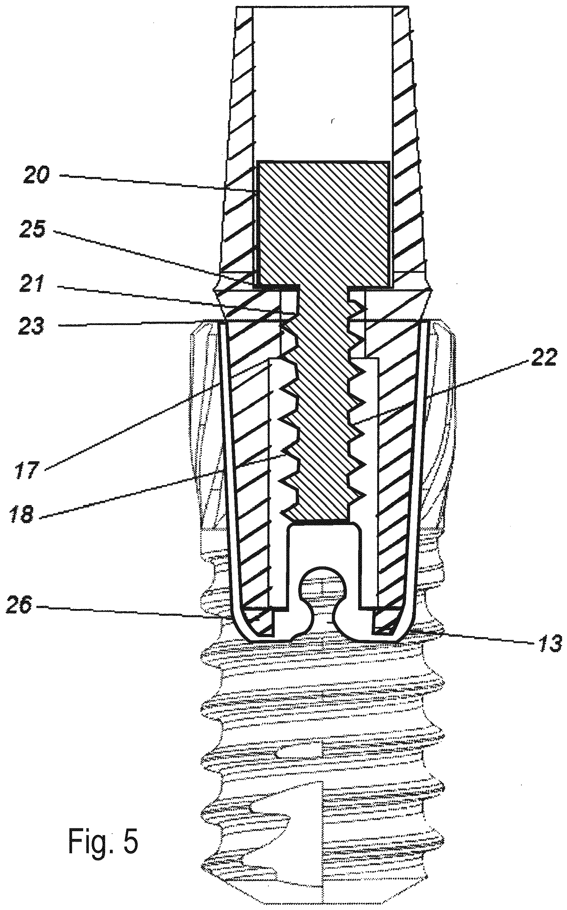

Die Einsteckkappe 3 weist oberhalb, also zur Kappenöffnung 11 hin gerichtete Schnittstelle 17 zur Verbindung mit dem Aufsatz 4 auf, wie diese besonders gut in Fig. 5 erkennbar ist. Die Aufnahme 13' ist lediglich schematisch angedeutet. Die Schnittstelle 17 kann vorzugsweise als Teil eines Führungskanals, insbesondere als Schraubkanal 18, ausgebildet sein. Dieser kann sich zentriert entlang der Längsachse A der Einsteckkappe 3 erstrecken.

Der Aufsatz 4 kann als ein sogenanntes Abutment, also ein Zwischenelement zwischen der künstlichen Zahnkrone und dem Implantat 2 ausgebildet sein oder selbst als Zahnkrone ausgebildet sein.

Der Aufsatz 4 ist zumindest bereichsweise hülsenförmig ausgebildet wobei sich der Führungskanal als Schraubkanal 18 durch die Einsteckkappe und als zylindrischer Hohlraum durch den Aufsatz 4 erstreckt und entlang der Längsachse A verläuft. Innerhalb dieses Führungskanals sind Anschlagsflächen 25 zum Anschlag eines Schraubenkopfes 20 eines mechanischen Verbindungsmittels 21, insbesondere einer Schraube, angeordnet. Die Schraube weist zudem ein Gewinde 22 auf, welches in den Schraubkanal 18 der Schnittstelle 17 eingreift.

Der Aufsatz 4 einen ringförmigen Endbereich 26 auf aus Ringabschnitten und Unterbrechungen auf, welche zusammen einen Ring definieren.

Der Führungskanal erstreckt sich endständig über die Außenseite der hülsenförmigen Aufnahme 13 der Einsteckkappe 3 und liegt an dieser kraftschlüssig an. Dadurch wird eine Materialverstärkung im Bereich der Aufnahme 13 der Einsteckkappe 3, so dass die Öffnungsweite d nicht mehr oder nur sehr begrenzt variierbar ist.

Durch das Zusammenspiel des Aufsatzes 4 und der Einsteckkappe 3 wird die Einsteckkappe 3 mit dem Vorsprung 8 des Implantats verklemmt oder verrastet. Der Aufsatz 4 dient dabei als Riegelelement welches eine Fixierung durch Formschluss zwischen der Einsteckkappe 3 und dem Implantat erreicht. Der Aufsatz 4 wiederum ist durch das mechanische Verbindungsmittel mit der Einsteckkappe 3 verbunden. Durch Lösen des Verbindungsmittels ist der Aufsatz 4 von der Einsteckkappe lösbar und die Einsteckkappe 3 aus dem Implantat entnehmbar. Somit kann die Einsteckkappe ausgetauscht werden. Das mechanische Verbindungsmittel verbindet dabei jedoch lediglich mittelbar über die Einsteckkappe den Aufsatz 4 mit dem Implantat 2.

Die Einsteckkappe dient somit als austauschbares Verbindungsmittel zwischen diesen beiden Elementen des Zahnersatzes und kann aus hygienischen Gründen ausgewechselt werden.

Vorteilhaft kann die Einsteckkappe aus Kunststoff gefertigt sein und einen antimikrobiellen Wirkstoff, z.B. eine Silberverbindung, aufweisen.

Die Einsteckkappe weist zudem einen Rand 23 auf, welche3 radial gegenüber der Kappenmantelfläche hervorsteht und welcher die Kappenöffnung begrenzt, wobei dieser Rand auf dem Implantat aufliegt und eine randseitigen Stirnfläche des Implantats zumindest bereichsweise bedeckt.

Endständig kann der Aufsatz 4 zudem einen oder mehrere Vorsprünge 19, Ausnehmungen und/oder Vertiefungen aufweisen, welche mit korrespondierenden Vorsprüngen, Vertiefungen und/oder Ausnehmungen, z.B. der spaltförmigen Vertiefung 16, in der Einsteckkappe 3 einen Formenschluss zur Verdrehsicherung des Aufsatzes 4 gegenüber der Einsteckkappe 3 bilden.

Die Einsteckkappe 3 kann vorzugsweise aus einem Polyetherketon, insbesondere aus einem PEEK, PEKK und/oder CF-PEEK gebildet sein.

Besonders bevorzugt umfasst die Einsteckkappe einen antibakteriellen und/oder entzündungshemmenden Wirkstoff.

Die Einsteckkappe 3 kann zudem eine Kopplungsstelle, z.B. ein Gewinde, zur Verbindung mit einer Einbringhilfe aufweisen, durch welche die Einsteckhülse den Schalenraum 6 des Implantats 2 einbringbar oder aus dem Implantat 2 entnehmbar ist.

Das mechanische Verbindungsmittel zur Verbindung des Aufsatzes 4 mit der Einsteckkappe 3 kann als Titan- oder Goldschaube ausgebildet sein. Dadurch dass die Verbindung mit dem Implantat 2 über die Einsteckkappe 3 erfolgt ist keine mechanische Schädigung des Implantats durch das mechanische Verbindungsmittel zu befürchten. Alternativ zu einer metallischen Schraube kann auch auf eine Kunststoffschraube, beispielsweise aus CF-PEEK zurückgegriffen werden. Endständig ist der Kanal 18 mit einem nicht-dargestellten Stopfen verschließbar.

Durch das besondere Design des mehrteiligen Zahnersatzes 1 sind keine scharfen Kanten, die Spannungen erzeugen könnten, vorhanden. Die Produktion der jeweiligen Einzelelemente kann in industriell großer Zahl mit vergleichsweise hohen Fertigungstoleranzen erfolgen. Eine besondere Fertigung der Einsteckkappe kann durch ein sogenanntes Injection-Molding Verfahren erfolgen.

Der Aufsatz 4 kann aus keramischen Materialien, Zirkonoxid, Glasmaterial, Metall-Keramik Hybdridwerkstoffen, insbesondere Cermets-Materialien und dergleichen hergestellt werden.

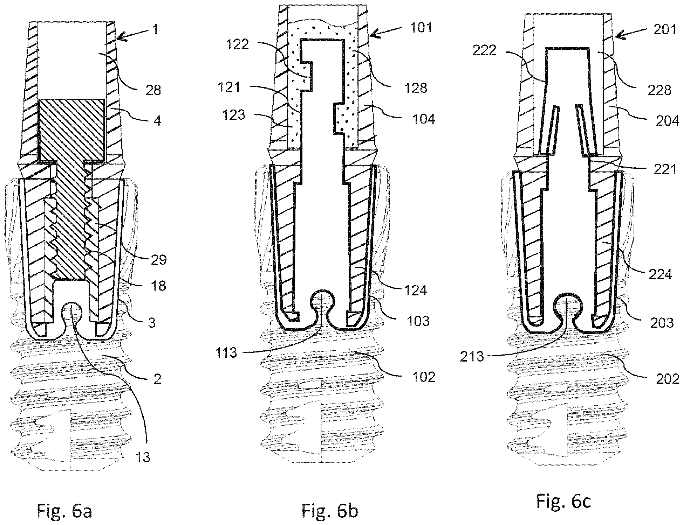

Fig. 6a-6c zeigt Zahnersatz-Varianten 1, 101 und 201 welche beispielhaft für unterschiedliche Ausführungsvarianten stehen, die im Rahmen der vorliegenden Erfindung fertigbar sind. Die Variante der Fig. 6a wurde bereits zuvor beschrieben.

In Fig. 6a erkennt man jedoch, dass der Schraubkanal 18 in einem hülsenförmigen Einsteckelement 29 angeordnet ist, welches auf die restliche Einsteckkappe formschlüssig aufgesteckt sein kann. In dieser Ausführungsvariante ist die Einsteckkappe somit zweiteilig ausgebildet. Bevorzugt ist es jedoch, wenn die Einsteckkappe in jeder Ausgestaltungsvariante einstückig ausgebildet ist, wobei anstelle des Einsteckelements ein Vorsprung mit dem entsprechenden Schraubkanal 18 monolithisch mit der restlichen Einsteckkappe ausgebildet ist.

Die Erläuterung zur Ausgestaltung der Zahnersatzvarianten der Fig. 6b und 6c erörtert lediglich Unterschiede zur Variante der Fig. 6a, welche im Wesentlichen in der verschiedenen Ausgestaltung der zweiten Schnittstelle 17 besteht.

Die Zahnersatzvariante der Fig. 6b weist ebenfalls ein Implantat 102, eine Einsteckkappe 103 als erfindungsgemäßen zahnmedizinischen Einsatz, und einen Aufsatz 104 auf.

Anstelle der Schraubverbindung weist die Einsteckkappe 103 einen stiftartigen Vorsprung 121 auf, welche sich entlang der Längsachse A von der Aufnahme 113 in den Kappenraum 124 erstreckt.

Bei eingestecktem Aufsatz 104, erstreckt sich der Vorsprung 121 in einen Führungskanal 128 welcher in dieser Ausführungsvariante nur im Aufsatz 104 ausgebildet ist und wobei randseitig durch Wandungen des Aufsatzes 104 begrenzt wird.

Der Vorsprung 121 kann endständig radiale Vorsprünge oder Ausnehmungen 122 aufweisen, zur besseren Verankerung des Vorsprungs 121 und damit auch der gesamten Einsteckkappe 103 in einer im Führungskanal 128 eingebrachten Vergussmasse 123. Die Vergussmasse 123 kann vorzugsweise ein Klebstoff oder eine aushärtende Masse, z.B. ein Zement oder eine aushärtende Polymermasse sein.

Zur Auswechslung der Einsteckkappe 103 kann durch ein Bohrgerät ein Ausbohren des Führungskanals 118 erfolgen und sodann kann der Aufsatz 104 und im Anschluss auch die Einsteckkappe 103 entnommen werden.

In einer bevorzugten Ausführungsvariante besteht der Aufsatz zumindest im Bereich des Führungskanals 118 aus einem härteren Material als das Material der Einsteckkappe und das Material der ausgehärteten Vergussmasse, so dass ein Ausbohren ohne Schädigung des Materials des Aufsatzes erfolgt und die Wiederverwendbarkeit des Aufsatzes 104 ermöglicht wird.

Die Zahnersatzvariante der Fig. 6c weist ein Implantat 202, eine Einsteckkappe 203 als erfindungsgemäßen zahnmedizinischen Einsatz, und einen Aufsatz 204 auf.

Die Einsteckkappe 203 weist einen stiftartigen Vorsprung 221 auf, der ebenfalls wie in Fig. 6b entlang der Längsachse der Einsteckkappe ausgehend von der Aufnahme 213 in den Kappenraum 224 hereinragt. Im Vergleich zu Fig. 6b weist der Vorsprung 221 der Einsteckkappe 204 endständig ein Rastelement 222 auf, welches mit einer Anschlagfläche 225 eines Führungskanals 228 des Aufsatzes 204 verrastet.

Zur Auswechslung der Einsteckkappe 203 kann durch ein Bohrgerät ein Ausbohren des Führungskanals 218 erfolgen und sodann kann der Aufsatz 204 und im Anschluss auch die Einsteckkappe 203 entnommen werden.

Alternativ kann die Verrastung auch durch ein Werkzeug gelöst werden. Zum leichteren Lösen der Verrastung kann eine Sollbruchstelle im Bereich des Rastelements vorgesehen sein.

In einer bevorzugten Ausführungsvariante besteht der Aufsatz zumindest im Bereich des Führungskanals 218 aus einem härteren Material als das Material der Einsteckkappe, insbesondere das Material der Einsteckkappe im Bereich der Verrastung.

### Bezugszeichen

- 1: Zahnersatz
- 2: Implantat
- 3: Einsteckkappe
- 4: Aufsatz
- 5: Schalenöffnung
- 6: Schalenraum
- 7: Bodenbereich
- 8: Vorsprung
- 9: Vorsprungsverdickung
- 10: Vorsprungsschaft
- 11: Kappenöffnung
- 12: Kappenboden
- 13: Aufnahme
- 14: Kappenmantelfläche
- 15: Vorsprünge
- 16: Spaltförmige Ausnehmung
- 17: Schnittstelle
- 18: Schraubkanal
- 19: Vorsprung
- 20: Schaubenkopf
- 21: Mechanisches Verbindungsmittel
- 22: Gewinde
- 23: Rand
- 24: Kappenraum
- 25: Anschlagsfläche
- 26: Endbereich
- 27: Aufnahmewandung
- 28: Führungskanal
- 29: Einsteckelement

- 101: Zahnersatz
- 102: Implantat
- 103: Einsteckkappe
- 104: Aufsatz
- 121: Vorsprung
- 122: Ausnehmungen
- 123: Vergussmasse
- 128: Führungskanal

- 201: Zahnersatz
- 202: Implantat
- 203: Einsteckkappe
- 204: Aufsatz
- 222: Rastelement
- 225: Anschlagfläche
- 228: Führungskanal

## Patentansprüche

1. Zahnmedizinischer Einsatz zur Verbindung eines zahnmedizinischen Implantats (2, 102, 202) mit einem zahnmedizinischen Aufsatz (4, 104, 204), wobei der zahnmedizinische Einsatz zumindest zwei Schnittstellen (13, 17) aufweist, wobei eine erste Schnittstelle (13, 113, 213) der zumindest zwei Schnittstellen im Zusammenspiel mit dem zahnmedizinischen Aufsatz (4, 104, 204) ausgebildet ist zur Fixierung des zahnmedizinischen Einsatzes mit dem Implantat (2, 102, 202) durch eine Rast- und/oder Klemmverbindung und wobei eine zweite Schnittstelle (17) der zumindest zwei Schnittstellen ausgebildet ist zur Fixierung des zahnmedizinischen Einsatzes mit dem zahnmedizinischen Aufsatz (4, 104, 204).

2. Zahnmedizinischer Einsatz nach Anspruch 1, **dadurch gekennzeichnet, dass** der zahnmedizinische Einsatz als Einsteckkappe (3. 103. 203) ausgebildet ist mit einer Kappenöffnung (11), einem Kappenboden (12) und einer Kappenmantelfläche (14), wobei der Kappenboden (12) als erste der zumindest zwei Schnittstellen eine Aufnahme (13, 113, 213) mit einem Aufnahmeraum aufweist zum Einführen eines Vorsprungs (8) des Implantats (2, 102, 202).

3. Zahnmedizinischer Einsatz nach Anspruch 1 oder 2, **dadurch gekennzeichnet, dass** die Aufnahme (13, 113, 213) eine Aufnahmewandung (27) aufweist, welche den Aufnahmeraum begrenzt, wobei sich benachbart zur Aufnahmewandung (27) ein Kappenraum (24) erstreckt in welchen der zahnmedizinische Aufsatz (4, 104, 204) bereichsweise einführbar ist.

4. Zahnmedizinischer Einsatz nach einem der vorhergehenden Ansprüche, **dadurch gekennzeichnet, dass** die Einsteckkappe (3, 103, 203) eine spaltförmige Ausnehmung (16) aufweist, welche sich zumindest bereichsweise über den Kappenboden (12) und zumindest bereichsweise über die Kappenmantelfläche (14) erstreckt.

5. Zahnmedizinischer Einsatz nach einem der vorhergehenden Ansprüche, **dadurch gekennzeichnet, dass** die zweite Schnittstelle (17) der zumindest zwei Schnittstellen als Schraubkanal (18) und/oder als stiftartiger Vorsprung (121, 221) ausgebildet ist.

6. Zahnmedizinischer Einsatz nach einem der vorhergehenden Ansprüche, **dadurch gekennzeichnet, dass** die Aufnahmewandung (27) Vorsprünge (15) aufweist, welche in den Aufnahmeraum hineinragen.

7. Zahnmedizinischer Einsatz nach einem der vorhergehenden Ansprüche, **dadurch gekennzeichnet, dass** der zahnmedizinische Einsatz (3, 103, 203) zumindest zu 45 Gew.%, vorzugsweise zumindest zu 90 Gew.%, ein Polyetherketon umfasst.

8. Zahnmedizinischer Einsatz nach einem der vorhergehenden Ansprüche, **dadurch gekennzeichnet, dass** der zahnmedizinische Einsatz (3, 103, 203) austauschbar, insbesondere durch Lösen eines Formschlusses mit dem Aufsatz (4, 104, 204) austauschbar, im Implantat (2, 102, 202) festlegbar ist und dass das Material des zahnmedizinischen Einsatzes (3, 103, 203) zumindest einen antibakteriellen, desinfizierenden und/oder entzündungshemmenden Wirkstoff umfasst.

9. Anordnung umfassend den zahnmedizinischen Einsatz (3, 103, 203) gemäß Anspruch 1 und einen zahnmedizinischen Aufsatz (4, 104, 204)), **dadurch gekennzeichnet, dass** der zahnmedizinische Aufsatz (4, 104, 204) einen ringförmigen Endabschnitt (26) aufweist, welcher in den Kappenraum (24) positionierbar ist.

10. Anordnung nach Anspruch 9, **dadurch gekennzeichnet, dass** zumindest 95% des Volumens des Kappenraumes (24), vorzugsweise der gesamte Kappenraum (24), durch den Aufsatz (4, 104, 204) ausgefüllt ist.

11. Anordnung nach Anspruch 9 und 10, **dadurch gekennzeichnet, dass** der ringförmige Endabschnitt (26) des Aufsatzes (4, 104, 204) an der Aufnahmewandung (27) des Aufnahmeraumes anliegt.

12. Anordnung nach einem der vorhergehenden Ansprüche, **dadurch gekennzeichnet, dass** der ringförmige Endabschnitt (26) des Aufsatzes (4, 104, 204) die Aufnahme (13, 113, 213) zumindest bereichsweise umgreift, derart, zur Verhinderung einer radialen Aufweitung der Öffnungsweite (d) der Aufnahme (13, 113,213).

13. Anordnung nach einem der vorhergehenden Ansprüche, **dadurch gekennzeichnet, dass** der zahnmedizinische Aufsatz (4, 104, 204), insbesondere der ringförmige Endabschnitt (26), zumindest eine Ausnehmung und/oder einen Vorsprung (19) aufweist, welcher mit einem korrespondierenden Vorsprung und/oder einer korrespondierenden Ausnehmung (16) des zahnmedizinischen Einsatzes einen Formenschluss zur Verdrehsicherung bildet.

14. Anordnung nach einem der vorhergehenden Ansprüche, **dadurch gekennzeichnet, dass** ringförmige Endabschnitt (26) parallel zur Längsachse (A) des Einsatzes (3, 103, 203) verlaufende Spalten, welche den ringförmigen Endabschnitt (26) in Ringsegmente unterteilt, aufweist.

15. Zahnersatz (1, 101, 201) umfassend eine Anordnung nach einem der vorhergehenden Ansprüche und ein Implantat (2, 101, 201), wobei der zahnmedizinische Einsatz der Anordnung eine Längsachse (A) aufweist, **dadurch gekennzeichnet, dass** das Implantat (2, 102, 202) zumindest bereichsweise schalenförmig mit einem Schalenraum (6) ausgebildet ist und einen Vorsprung (8), insbesondere einen Vorsprung (8) auf der Längsachse (A), aufweist, welcher sich in den Schalenraum (6) erstreckt.
